# FASCICULE DE BREVET EUROPEEN

(11) **EP 3 399 498 B1**
(45) Date de publication et mention de la délivrance du brevet: **29.06.2022**
(21) Numéro de dépôt: 18170550.0
(22) Date de dépôt: 03.05.2018
(51) Int. Cl.: G06T 5/00, G06T 5/50

(54) **METHODE DE TRAITEMENT DE CLICHES DE DIFFRACTION PERMETTANT D'OBTENIR DES IMAGES OFFRANT UN CONTRASTE PLUS HOMOGENE**
METHODE ZUR BEARBEITUNG VON BEUGUNGSMUSTERN, DIE BILDER MIT HOMOGENEREM KONTRAST ERMÖGLICHT
METHOD FOR TREATING DIFFRACTION BLOCKS FOR OBTAINING IMAGES PROVIDING A MORE UNIFORM CONTRAST

(30) Priorité: 05.05.2017 FR 1754000
(43) Date de publication de la demande: 07.11.2018
(73) Titulaire: Commissariat à l'énergie atomique et aux énergies alternatives, 75015 Paris (FR)
(72) Inventeur: ROUVIERE, Jean-Luc, 38240 MEYLAN (FR); BERNIER, Nicolas, 38700 LE SAPPEY EN CHARTREUSE (FR); HAAS, Benedikt, 38000 GRENOBLE (FR)
(74) Mandataire: Brevalex

(56) Documents cités:
- Anonymous: "Bsoft: Bshow Crystallography", , 29 avril 2017 (2017-04-29), XP055435250, Extrait de l'Internet: URL:https://web.archive.org/web/2017042901 5215/http://www.msg.ucsf.edu/local/program s/bsoft/bshow/bshow_xtal.html [extrait le 2017-12-14]
- GREG JOHNSON ET AL: "X-ray diffraction contrast tomography: a novel technique for three-dimensional grain mapping of polycrystals. II. The combined case", JOURNAL OF APPLIED CRYSTALLOGRAPHY, vol. 41, no. 2, 8 mars 2008 (2008-03-08), pages 310-318, XP055117130, ISSN: 0021-8898, DOI: 10.1107/S0021889808001726
- WEBB STEPHEN E D ET AL: "Single-Molecule Imaging and Fluorescence Lifetime Imaging Microscopy Show Different Structures for High- and Low-Affinity Epidermal Growth Factor Receptors in A431 Cells", BIOPHYSICAL JOURNAL, vol. 94, no. 3, 29 février 2008 (2008-02-29), pages 803-819, XP029293705, ISSN: 0006-3495, DOI: 10.1529/BIOPHYSJ.107.112623
- XU P ET AL: "Cross-correlation method for intensity measurement of transmission electron diffraction patterns", ULTRAMICROSCOPY, ELSEVIER, AMSTERDAM, NL, vol. 53, no. 1, 1 janvier 1994 (1994-01-01), pages 15-18, XP025753340, ISSN: 0304-3991, DOI: 10.1016/0304-3991(94)90100-7 [extrait le 1994-01-01]
- CROCKER J C ET AL: "Methods of Digital Video Microscopy for Colloidal Studies", JOURNAL OF COLLOID AND INTERFACE SCIENCE, ACADEMIC PRESS,INC, US, vol. 179, 1 janvier 1996 (1996-01-01), pages 298-310, XP002436567, ISSN: 0021-9797, DOI: 10.1006/JCIS.1996.0217
- Castaño-Díez Daniel ET AL: "Image Processing of 2D Crystal Images Image Processing of 2D Crystal Images", Methods in Molecular Biology, 7 October 2012 (2012-10-07), pages 171-194, XP055865947, DOI: 10.1007/978-1-62703-176-9_10.Source: Retrieved from the Internet: URL:https://www.researchgate.net/profile/H enning-Stahlberg/publication/232966802_Ima ge_Processing_of_2D_Crystal_Images/links/0 2bfe50c99165c89d7000000/Image-Processing-o f-2D-Crystal-Images.pdf [retrieved on 2021-11-25]

## Description

### DOMAINE TECHNIQUE ET ÉTAT DE LA TECHNIQUE ANTÉRIEURE

La présente invention se rapporte à une méthode de traitement de clichés de diffraction permettant d'obtenir des images offrant un contraste plus homogène, en vue d'acquérir par exemple des informations structurales et/ou chimiques sur des structures au moins en partie cristallines ou au moins en partie amorphes, et à une méthode d'analyse d'échantillons mettant en œuvre une telle méthode de traitement.

Un microscope électronique en transmission en mode balayage ou STEM (« Scanning transmission electron microscopy en terminologie anglo-saxonne) est un microscope électronique en transmission fonctionnant avec une sonde électronique balayant une d'intérêt de l'échantillon analysé Un système de lentilles magnétiques permet à la fois de focaliser et de déplacer le faisceau d'électrons pour balayer la surface de l'échantillon à analyser. Des clichés de diffraction corrélés à la position du faisceau sur l'échantillon sont obtenus.

Le traitement de ces clichés permet par exemple d'obtenir des cartographies d'orientation, des cartographies de déformation, des cartographies de champ électrique...

Le traitement de ces clichés prévoit par exemple l'utilisation de masque numérique pour masquer certaines zones des clichés de diffractions, afin de récolter les informations uniquement sur tout ou partie des disques de diffraction. Le logiciel "Bsoft: Bshow Crystallography", https://web.archive.org/web/20170429015215/http://www.msg.ucsf.edu/ local/programs/bsoft/bshow/bshow_xtal.html , ainsi que les publications Greg Johnson et Al : "X-ray diffraction contrast tomography: a novel technique for three-dimensional grain mapping of polycrystals. II. The combined case", Journal of Applied Crystallography, vol. 41, no. 2, 8 mars 2008, pages 310-318, et Castaño-Diez Daniel et Al : "Image Processing of 2D Crystal Images Image Processing of 2D Crystal Images", Methods in Molecular Biology, 7 octobre 2012, pages 171-194 divulguent de tels traitements.

### EXPOSÉ DE L'INVENTION

C'est par conséquent un but de la présente invention d'offrir une nouvelle méthode de traitement des clichés de diffraction d'un matériau en vue d'obtenir des informations structurales et/ou chimiques sur ce matériau.

Le but énoncé ci-dessous est obtenu par une méthode de traitement des clichés de diffraction obtenus par microscopie en transmission en mode balayage, comportant une étape d'utilisation d'un masque sur les clichés de sorte à extraire desdits clichés tout ou partie du fond diffus et une étape de traitement numériques de signaux du fond diffus afin de réaliser des images reconstruites dudit échantillon.

En fonction des zones de fond diffus sélectionnées par le masque, il est possible d'obtenir différents types d'images. Par exemple, en conservant les signaux de tout le fond diffus, il est possible de reconstruire des images de l'échantillon, mais présentant un contraste supérieur aux images classiques obtenues par exemple en sélectionnant les disques de diffraction. Selon un autre exemple, en sélectionnant les zones de fond diffus autour d'un ou de certains disques de diffraction, il est possible de réaliser des images mettant en évidence des propriétés anisotropes de l'échantillon.

En d'autres termes, la méthode selon la présente invention intègre tout ou partie du signal détecté qui se situe entre le disque central et les disques de diffraction pour un cristal, et entre les anneaux de diffraction pour un matériau amorphe, ce signal correspondant au fond diffus, contrairement aux méthodes de traitement des clichés de diffraction de l'état de la technique qui utilisent les signaux des disques de diffraction. Les inventeurs, en pensant utiliser les signaux du fond diffus, obtiennent des images présentant un contraste plus homogène et qui permettent d'obtenir des informations structurales et/ou chimiques supplémentaires.

De manière très avantageuse, cette méthode de traitement peut également permettre de déterminer la désorientation de l'échantillon.

L'invention porte également sur une méthode d'analyse d'échantillons comportant l'étape d'acquisition d'une série de clichés de diffraction par microscopie par balayage à transmission et le traitement des clichés par la méthode de traitement selon l'invention.

La présente invention a alors pour objet une méthode de traitement de clichés de diffraction ainsi que décrite dans les revendications 1-6.

La présente invention a également pour objet une méthode d'analyse d'un échantillon au moins en partie cristallin ou polycristallin ou au moins en partie amorphe, suivant les revendications 7-10.

### BRÈVE DESCRIPTION DES DESSINS

La présente invention sera mieux comprise sur la base de la description qui va suivre et des dessins en annexe sur lesquels :
- la figure 1 est une représentation schématique d'un microscope électronique en transmission en mode balayage pouvant être mis en œuvre pour obtenir les clichés de diffraction traités par la méthode de traitement selon l'invention,
- la figure 2A représente un cliché de diffraction d'un échantillon cristallin en condition d'axe de zone obtenu avec un faisceau peu convergent,
- la figure 2B représente un cliché de diffraction d'un échantillon cristallin en condition d'axe de zone obtenu avec un faisceau présentant un angle de convergence de 2,2 mrad,
- la figure 2C représente un cliché de diffraction d'un échantillon cristallin hors axe de zone obtenu avec un faisceau convergent et en mode précession,
- la figure 2D représente un cliché de diffraction d'un échantillon amorphe,
- la figure 3 est une représentation d'un cliché de diffraction acquis sur du silicium en axe de zone <110> qui peut être traité par la méthode selon l'invention,
- la figure 4 est une représentation d'un cliché de diffraction acquis sur du silicium en axe de zone <110> auquel est appliqué un exemple de masque M1 pouvant être mis en œuvre dans la méthode selon l'invention,
- la figure 5 est une représentation d'un cliché de diffraction acquis sur du silicium en axe de zone <110> auquel est appliqué un exemple de masque M2 pouvant être mis en œuvre dans la méthode selon l'invention,
- la figure 6 est une représentation d'un cliché de diffraction acquis sur du GaN,
- la figure 7A est une représentation du masque M1 selon l'invention,
- la figure 7B est une représentation d'un masque MBF de l'état de la technique,
- la figure 7C est une représentation d'un masque MADF de l'état de la technique,
- la figure 8A est une image reconstruite en appliquant le masque M1 de la figure 7A au cliché de diffraction de la figure 6,
- la figure 8B est une image reconstruite en appliquant le masque MBF de la figure 7B au cliché de diffraction de la figure 6,
- la figure 8C est une image reconstruite en appliquant le masque MADF de la figure 7C au cliché de diffraction de la figure 6,
- la figure 9A représente un cliché de diffraction acquis sur du GaN selon la direction <100>,
- la figure 9B représente le cliché de la figure 9A après application du masque M1 selon un exemple de l'invention.
- la figure 9C représente le fond diffus extrait de la figure 9B et approximé par une fonction Gaussienne,
- la figure 9D représente le profil P1 du fond diffus le long de la ligne horizontale L1 sur le cliché de la figure 9A et le profil P2 du fond diffus le long de la ligne horizontale L2 sur le fond diffus extrait de la figure 9C.

### EXPOSÉ DÉTAILLÉ DE MODES DE RÉALISATION PARTICULIERS

La méthode selon l'invention permet l'analyse de matériaux monocristallins, de matériaux polycristallins et de matériaux amorphes.

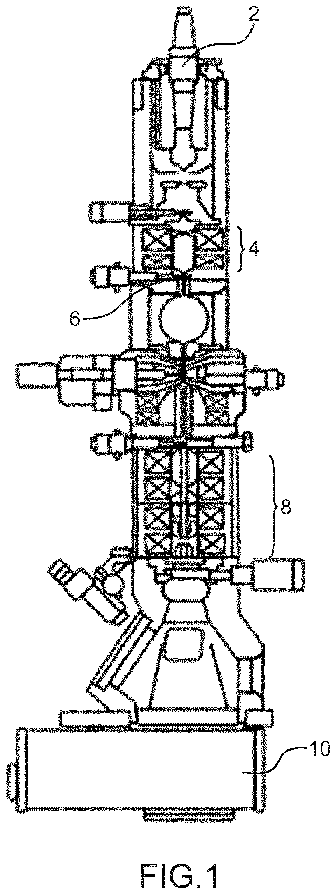

Sur la figure 1, on peut voir une représentation schématique d'un microscope électronique en transmission en mode balayage pouvant être mis en œuvre pour réaliser une série de clichés de diffraction de l'échantillon à étudier. La série de clichés de diffraction comporte au moins deux clichés de diffraction. Chaque cliché de diffraction est repéré à une position sur l'échantillon.

Le microscope comporte un canon à électrons 2 destiné à produire un faisceau d'électrons, des lentilles magnétiques 4, servant à focaliser le faisceau électronique et à assurer son balayage, une zone 6 de mise en place d'un échantillon, un système de lentilles 8 destiné à former l'image et un ou plusieurs détecteurs 10.

En variante, les clichés de diffraction peuvent être obtenus en rayons X ou en neutrons.

Le ou les détecteurs 10 sont des détecteurs multicanaux comportant au moins quatre canaux ou pixels, et avantageusement au moins 100 canaux.

Par exemple, un détecteur peut être une caméra CCD (« Charge Couple Device » en terminologie anglo-saxonne) ou il peut s'agir d'un détecteur à uniquement 4 secteurs angulaires.

L'échantillon comporte un matériau au moins en partie monocristallin ou au moins en partie amorphe.

Dans la description qui va suivre, nous considérerons principalement le cas d'un matériau monocristallin.

Les clichés de diffraction sont obtenus en balayant une zone donnée de la surface de l'échantillon avec un sonde ou faisceau, par exemple un faisceau électronique, de manière prédéterminée de sorte à couvrir toute la zone donnée. La zone donnée peut correspondre à toute la surface de l'échantillon ou à une partie seulement de celle-ci. La zone donnée correspond à une zone d'intérêt de l'échantillon. La zone donnée a par exemple une surface de quelques nm² à quelques µm².

L'échantillon a été préparé pour une analyse par microscopie à transmission. L'échantillon est sous forme de lame mince transparente aux électrons et présente généralement une épaisseur de quelques dizaines à quelques centaines de nanomètres. Les échantillons sont typiquement préparés soit par amincissement ionique (type FIB pour Focused Ion Beam en terminologie anglo-saxonne), soit par polissage mécanique, soit par attaque chimique. Ces préparations sont bien connues de l'homme du métier et ne seront pas décrites plus en détail ici.

Dans la présente demande, on entend par "cliché de diffraction", l'ensemble des signaux, recueillis par un détecteur multicanaux, qui donnent des informations sur les directions, dans lesquelles les particules de la sonde se propagent après leurs interactions avec l'échantillon.

Les clichés de diffraction comportent au moins le disque de diffraction correspondant au faisceau transmis qui n'a pratiquement pas été dévié lors de la traversée de l'échantillon. Ce disque sera désigné « disque central ». Le disque central est celui qui présente la plus forte intensité.

Suivant la nature de l'échantillon et si celui-ci est orienté ou non, les clichés de diffraction diffèrent. Un matériau monocristallin est dit orienté lorsque l'un des axes de zone du matériau est parallèle au faisceau électronique, l'échantillon est alors en condition d'axe de zone, sinon il est qualifié « d'échantillon désorienté ».

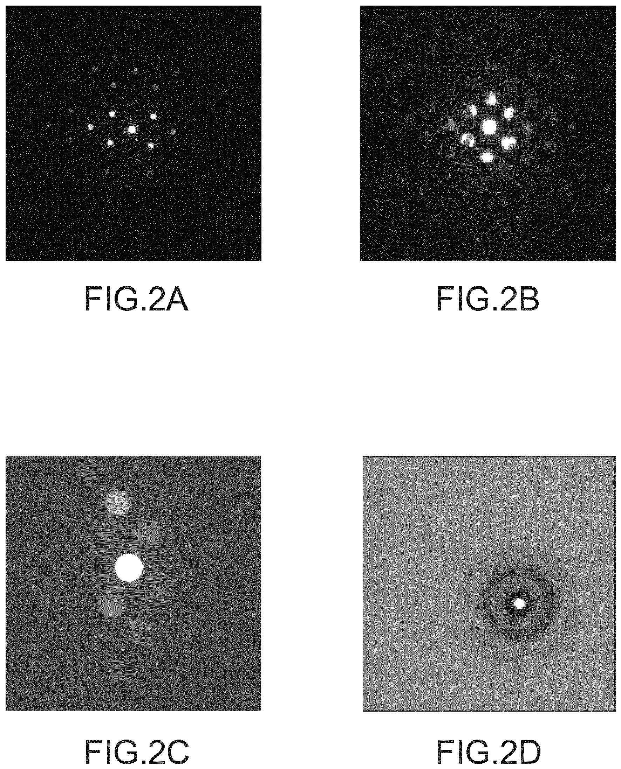

Les figures 2A et 2B sont des clichés de diffraction d'échantillons orientés ou en condition d'axe de zone. Sur la figure 2C, l'échantillon est désorienté ou hors axe de zone.

Dans le cas d'un matériau monocristallin orienté, les clichés de diffraction comportent le disque central et les disques obtenus par le faisceau diffracté par les atomes, ces disques sont désignés « disques diffractés ». Les disques sont répartis de manière périodique et l'intensité des disques est répartie de manière homogène autour du faisceau central.

Dans le cas d'un matériau monocristallin désorienté, les clichés de diffraction comportent le disque central et les disques diffractés, les disques sont répartis de manière périodique, mais l'intensité des disques n'est plus répartie de manière homogène autour du faisceau central.

Dans le cas d'un matériau amorphe, par exemple du GeSbTe, les clichés de diffraction comportent le disque central et des anneaux concentriques plus ou moins continus. Les anneaux concentriques résultent de l'existence d'un certain ordre local des atomes. La figure 2D est un cliché de diffraction d'un matériau amorphe sur lequel on distingue les anneaux concentriques.

Dans le cas d'un échantillon comportant à la fois du matériau amorphe et du matériau cristallin, il est possible de visualiser sur le même cliché des disques de diffraction et des anneaux concentriques. Par exemple, on détecte d'abord les disques de diffraction, puis les anneaux soit après transformation en coordonnées polaires soit après moyennage radial.

Dans la suite de la description les disques de diffraction et les anneaux concentriques seront désignés « parties principales » des clichés de diffraction.

De préférence, l'angle de convergence du faisceau électronique est tel que, dans le cas d'un échantillon au moins en partie cristallin, la plupart des disques de diffraction ne se superposent pas même en partie. Par exemple, l'angle de convergence est de l'ordre de 0,114° (2 mrad). Par exemple, l'angle de convergence maximal est de 0,229° (4 mrad) dans le cas du silicium en axe de zone <110> à une tension d'accélération du microscope de 200 kV.

Le cliché de diffraction de la figure 2A a été réalisé avec un faisceau peu convergent, dont l'angle de convergence est égale à 0, 0343°(0,6 mrad), et le cliché de diffraction de la figure 2B a été réalisé avec un faisceau dont l'angle de convergence est égal à 0,126°(2,2 mrad).

Le microscope comporte un axe optique. Les clichés de diffraction peuvent être obtenus avec un faisceau électronique incident fixe parallèle à l'axe optique ou très avantageusement en mode précession.

Le mode précession signifie que le faisceau incident effectue au moins une révolution autour de l'axe optique, le faisceau incident formant un angle par rapport à l'axe optique du microscope, et génère un cône de précession. L'angle peut être constant ou non. Dans le cas d'un cône de précession symétrique généré par un cercle, l'angle du cône est nommé angle de précession.

L'illumination par un faisceau d'électrons en mode précession permet de moyenner plusieurs directions d'incidence et d'obtenir plus de disques de diffraction. Ceux-ci présentent des intensités plus homogènes. En particulier, les contrastes d'interférence dues à la diffraction cohérente s'estompent ou disparaissent et l'on obtient alors des disques de diffraction homogènes en intensité avec des contours bien définis.

Le nombre de clichés de diffraction obtenu dépend du pas du faisceau incident. Il peut être par exemple compris entre 10 et 100000.

La méthode de traitement comporte les étapes suivantes à partir de la série de clichés de diffraction décrit ci-dessus.

La méthode de traitement selon l'invention comporte une première étape E1 de positionnement des pixels correspondant au disque central sur chaque cliché de diffraction.

Pour cela, un des clichés de diffraction est sélectionné et est désigné cliché de référence. On applique ensuite un algorithme de reconnaissance de forme utilisant la corrélation croisée (« cross-correlation » en terminologie anglo-saxonne) entre le cliché de référence et les autres clichés de diffraction afin de déterminer la localisation des disques centraux. De manière avantageuse, une corrélation croisée masquée peut être réalisée suivant la méthode décrite dans le document Padfield et al, « Masked object registration in the Fourrier domain » IEEE Transactions on Image Processing, 21(5) : 2706-2718, 2012*.*

A la fin de cette étape, les pixels correspondant aux disques centraux sont positionnés sur tous les clichés de diffraction.

Lors d'une étape suivante E2, on positionne sur chaque cliché de diffraction les pixels correspondant aux "parties principales".

Dans le cas d'un échantillon cristallin, les parties principales sont des disques de diffraction. On peut utiliser un logiciel de reconnaissance de forme, tel que le logiciel TEMA décrit dans le document Zuo J.M. et al., Lattice and strain analysis of atomic resolution Z-contrast images based on template matching, ULTRAMICROSCOPY, Volume: 136, Pages: 50-60*.*

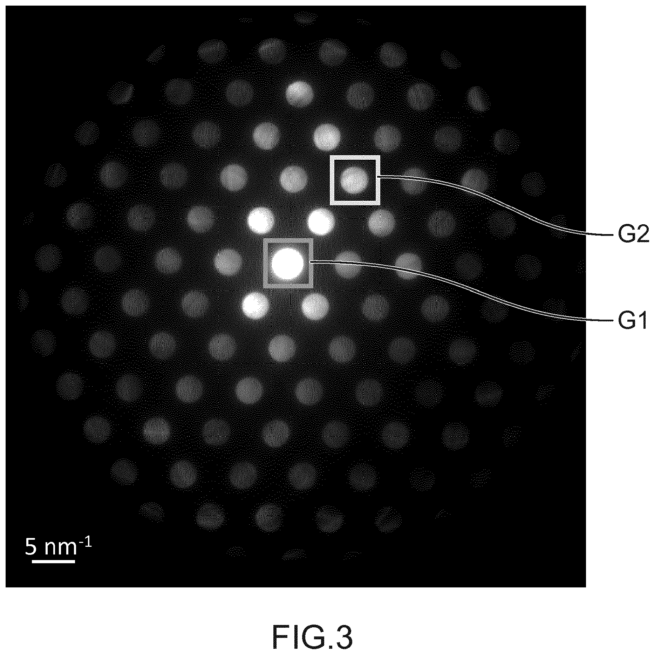

Par exemple, on peut tout d'abord créer un gabarit. Par exemple sur le cliché de diffraction de la figure 3 acquis sur du silicium en axe de zone <110> des exemples de gabarits G1 et G2 sont représentés. Le gabarit G1 est une partie du cliché de diffraction comprenant le disque central et la région située autour du disque, région excluant tout disque de diffraction. Le gabarit G2 est une partie du cliché de diffraction comprenant un disque de diffraction et la région située autour du disque, région excluant le disque central et tout autre disque de diffraction, le gabarit G2 est choisi par exemple dans le cas où le disque central est trop intense.

Le gabarit ainsi créé est utilisé pour déterminer la position des autres disques diffraction. Le gabarit est déplacé sur le cliché de diffraction et par corrélation croisée, on détermine l'emplacement des autres disques de diffraction.

Dans le cas d'un échantillon en matériau amorphe, la position des anneaux est déterminée par exemple en utilisant un algorithme qui détecte les maxima en intensité locaux. Ces maxima sont détectés soit après transformation en coordonnées polaires soit après moyennage radial. On peut corriger l'astigmatisme de diffraction avec l'utilisation d'une ellipse pour l'intégration radiale de l'intensité sur un cliché de diffraction référence. Cette correction peut ensuite être appliquée à tous les autres clichés de diffraction.

Le repérage des disques de diffraction se faisant par reconnaissance de forme, les étapes E1 et E2 peuvent s'appliquer à un matériau polycristallin ou à un échantillon désorienté, il n'est en effet pas nécessaire d'avoir une répartition périodique des disques de diffraction.

A la fin de cette étape, les positions de toutes les parties actives de chaque cliché de diffraction sont déterminées.

Lors d'une étape suivante E3, on retire des clichés de diffraction le disque central et les parties principales. Pour cela, on applique à chaque cliché de diffraction un masque adapté qui permet de supprimer les parties principales. Chaque masque est créé à partir des déterminations de la position du disque central et des disques diffractés ou des anneaux concentriques réalisées aux étapes E1 et E2. Chaque masque est adapté à un cliché de diffraction. Le masque numérique est appelé « masque dynamique ».

Pour filtrer un cliché de diffraction avec un masque donné, on multiplie la valeur du cliché par le masque, les zones à masquer sont multipliées par 0 et les zones à ne pas masquer sont multipliées par 1.

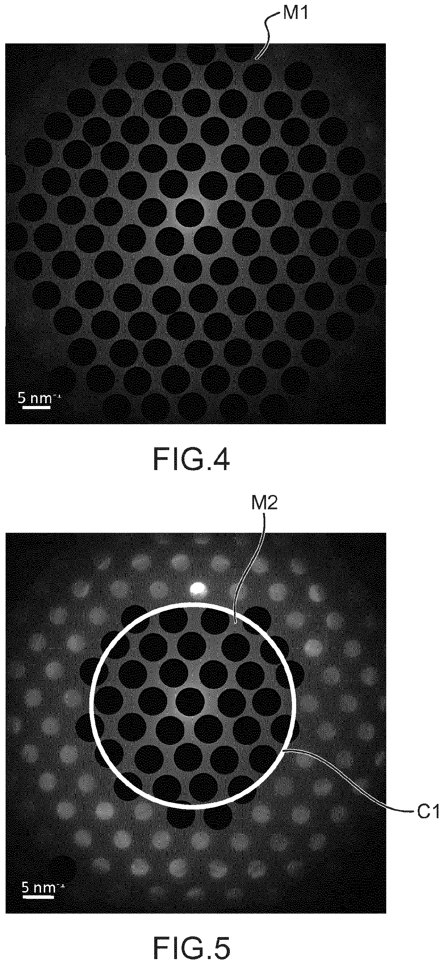

Sur la figure 4, on peut voir une représentation d'un cliché de diffraction de silicium <110> après le traitement de l'étape E3, lors de laquelle tous les disques de diffraction et le disque central ont été supprimés. Le masque numérique M1 appliqué est une répétition des gabarits établis précédemment.

Sur la figure 5, on peut voir une représentation d'un cliché de diffraction de silicium <110> après le traitement de l'étape E3 par un autre masque M2, lors de laquelle seuls les disques de diffraction et le disque central localisés sous un angle de diffraction donné ont été supprimés (contenu dans le cercle C1). Le masque numérique appliqué est une répétition des gabarits établis précédemment dans le cercle C1.

A la fin de cette étape, les clichés de diffraction ne comportent plus que le fond diffus, également appelé fond continu inélastique, résultant des électrons ayant diffusés complétement inélastiquement.

Lors d'une étape suivante E4, les signaux du fond diffus sont exploités afin de générer des images reconstruites de la zone étudiée. Plusieurs exploitations peuvent être faites.

Dans un premier exemple, on effectue la somme pour chaque pixel des intensités correspondant au fond continu de tous les clichés de diffraction. On obtient alors une image reconstruite réalisée essentiellement avec les particules diffusées inélastiquement ou sur les défauts du cristal. L'image obtenue a un contraste plus homogène que celui des images obtenues par les méthodes de traitement de l'été de la technique.

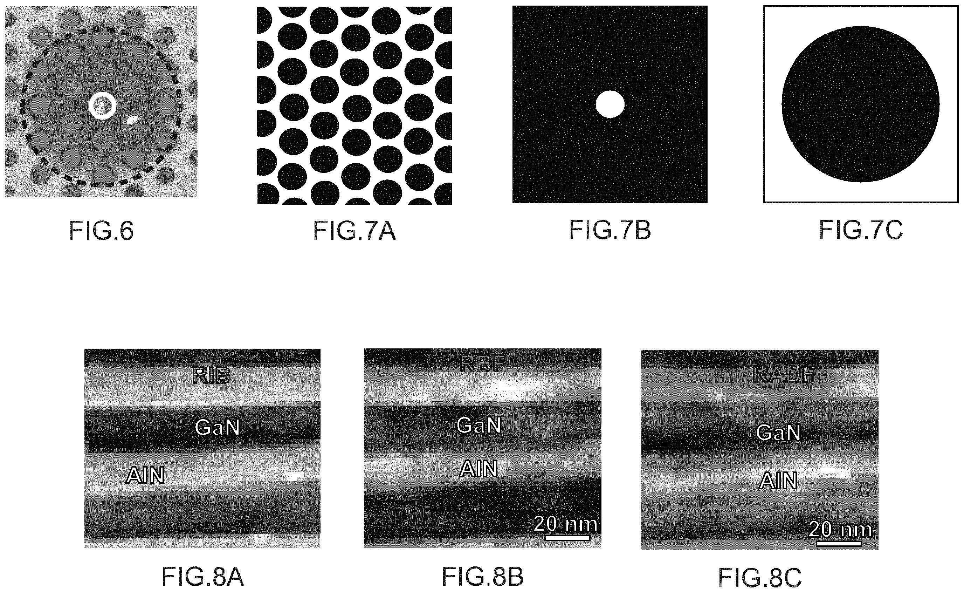

Sur la figure 6, on peut voir un cliché de diffraction de GaN observé selon l'axe c (<0001>).Sur les figures 7A, 7B et 7C, on peut voir trois types de masque et sur les figures 8A, 8B et 8C, on peut voir les images reconstruites en utilisant les masques 7A, 7B et 7C respectivement. Sur tous les masques, les zones en blanc correspondent à la valeur 1 et les zones en noir correspondent à la valeur 0.

Sur la figure 7A, il s'agit d'un masque selon un exemple de la présente invention.

Sur la figure 7B, il s'agit d'un masque de l'état de la technique pour faire une reconstruction RBD (Reconstructed bright field en terminologie anglo-saxonne).

Sur la Sur la figure 7C, il s'agit d'un autre masque de l'état de la technique pour faire une reconstruction RADF (Reconstructed Annular Dark Field en terminologie anglo-saxonne)

On constate que l'image reconstruite incohérente ou RIB (Reconstructed Incoherent Background en terminologie anglo-saxonne) obtenue en appliquant un masque selon un exemple de la présente invention présente un contraste plus homogène que les images obtenues par des masques de l'état de la technique.

Dans un autre exemple, on somme les intensités de zones du fond diffus situées uniquement autour de certains disques diffraction. Par exemple sur la figure 5, on somme les intensités du fond diffus situé sur le disque C1.

Dans un autre exemple de réalisation, on somme le fond diffus uniquement autour d'un disque de diffraction. L'image ainsi obtenue permet de mettre en évidence des propriétés anisotropes du matériau et/ou les défauts.

Dans un autre exemple, on peut sommer le fond diffus situé sur différentes zones annulaires concentriques centrées sur le disque central, il ne s'agit pas des anneaux des clichés de diffraction d'un matériau amorphe.

La ou les images reconstruites ainsi obtenues peuvent être avantageusement utilisées pour interpréter d'autres représentations de la zone étudiée.

Par exemple, à partir des mêmes clichés de diffraction, il est possible de réaliser une cartographie de déformation, une cartographie de champ électrique... Par exemple il est possible de comparer la largeur d'interface chimique visible sur les photos reconstruites et celle visible sur la cartographie de déformation. Sur la cartographie de déformation, cette interface se traduit par une déformation d'une direction cristallographique représentée par un jeu de couleurs qui correspond aux pourcentages de décalage du paramètre de maille. On dispose ainsi de deux représentations différentes de la même zone de l'échantillon, ce qui permet de confirmer les observations faites et/ou de fournir des explications à une variation visible sur la cartographie.

En effet, puisque l'on utilise les mêmes clichés de diffraction pour produire les images reconstruites et pour générer des cartographies, les deux représentations sont exactement celles de la même zone. Elles peuvent être comparées et un élément observé sur l'une des représentations se retrouve nécessaire sur l'autre représentation.

Dans un autre exemple de réalisation, on peut réaliser simultanément à l'étape E3, une étape E3' permettant de réaliser une image des défauts cristallographiques de l'échantillon, tels que des dislocations, des fautes d'empilement, des macles.

En effet, les défauts du cristal se traduisent, sur un cliché de diffraction, par des points entre les disques de diffraction, appelés extra-spots.

On peut alors appliquer un autre masque dynamique à chaque cliché de sorte à conserver le fond diffus contenant un ou des extra-spots.

Les signaux ainsi sélectionnés par ce nouveau masque sont sommés pour tous les clichés. On obtient alors une image représentant les défauts du cristal et plus généralement l'arrangement des espèces en présence.

L'image ainsi obtenue peut alors être comparée à l'image reconstruite ou aux images reconstruites obtenue(s) à l'étape E4.

Par ailleurs, grâce à l'invention, il est possible de déterminer précisément la désorientation angulaire du cristal par rapport à la condition d'axe de zone. En effet, il est possible grâce à l'invention de déterminer le centre de la sphère d'Ewald.

Après application du masque à l'étape E3, seul est conservé tout ou partie du fond diffus. Ce fond diffus peut être approximé par une fonction gaussienne ou une lorentzienne.

Dans le cas d'un cristal orienté proche d'un axe de zone, le centre de la fonction d'approximation permet de localiser le centre de la sphère d'Ewald.

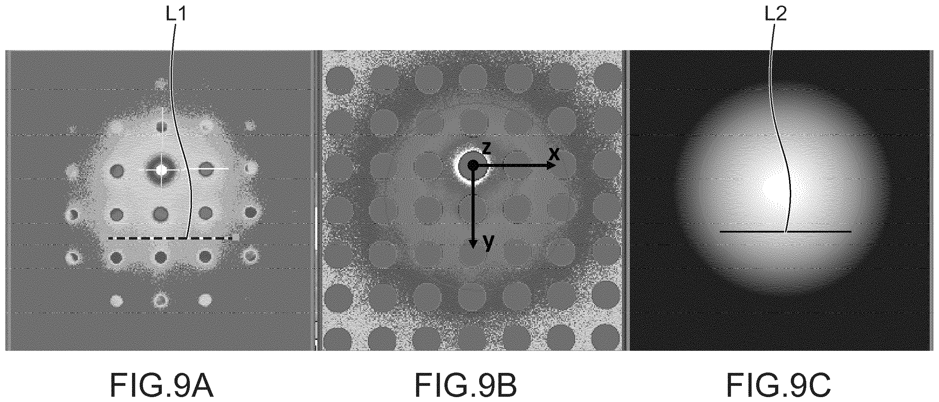

Sur la figure 9A, on peut voir un cliché de diffraction acquis sur du GaN selon la direction <100>.

Sur la figure 9B, on peut voir le cliché de la figure 9A après application d'un masque selon l'invention.

Le fond diffus est extrait (figure 9C) puis approximé par une fonction Gaussienne permettant de déterminer le centre du disque de la figure 9B qui correspond à la direction du faisceau incident d'électrons.

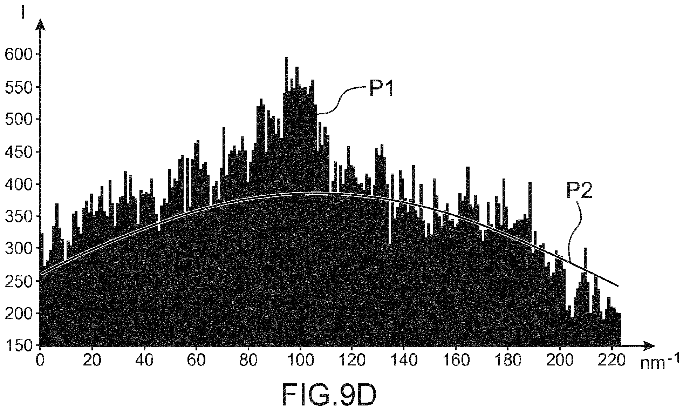

Les profils sont ensuite extraits. Sur la figure 9D, on peut voir le profil P1 du fond diffus le long de la ligne horizontale L1 sur le cliché de la figure 9A, et le profil P2 (ligne continue) du fond diffus le long de la ligne horizontale L2 sur le fond diffus extrait de la figure 9C. Sur l'axe des ordonnées il s'agit d'une intensité I et sur l'axe des abscisses il s'agit de la position en nm⁻¹.

Les profils extraits représentés sur la figure 9D permettent de mesurer les rotations hors du plan du cliché de diffraction ; plan représenté ici par les axes x et y représentés sur la figure 9B. Les rotations theta_x (autour de l'axe x) et theta_y (autour de l'axe y) du cliché de diffraction peuvent alors être déterminées. Les rotations dans le plan, i.e. autour de l'axe z, peuvent être déterminées de manière directe et usuelle à partir des clichés de diffraction, la présente invention permet de déterminer l'orientation complète en trois dimensions du cristal sondé.

A partir de la connaissance de cette désorientation, les clichés et/ou les images reconstruites peuvent être correctement interprétés.

## Revendications

1. Méthode de traitement numérique de clichés de diffraction comportant les étapes suivantes, à partir d'une série de clichés de diffraction obtenue par un balayage d'une zone donnée d'un échantillon par une sonde, les clichés de diffraction comportant un disque central étant le disque qui présente la plus forte intensité, et au moins une partie principale, désignant des disques diffractés pour un matériau monocristallin ou polycristallin et des anneaux pour un matériau amorphe,
a) détection de la position du disque central sur chaque cliché de diffraction,
b) détection de la au moins une partie principale sur chaque cliché de diffraction,
c) application d'un masque numérique sur chaque cliché de diffraction, supprime-ant sur chaque cliché de diffraction les pixels correspondant au disque central et à la au moins une partie principale de sorte à ne conserver que le fond diffus, ledit masque numérique étant élaboré à partir des détections des étapes a) et b),
d) pour au moins une partie des pixels du fond diffus, sommation des intensités extraites de tous les clichés de diffraction de la partie des pixels du fond diffus sur tous les clichés de diffraction, et obtention d'au moins une image reconstruite de ladite zone donnée.

2. Méthode de traitement selon la revendication 1, dans laquelle, lors de l'étape d), les intensités de tous les pixels sont sommées.

3. Méthode de traitement selon la revendication 1, dans laquelle, lors de l'étape d), seules les intensités des pixels entourant la au moins partie principale sont sommées.

4. Méthode de traitement selon la revendication 1, dans laquelle, lors de l'étape d), les intensités des pixels situés sur au moins une zone annulaire concentrique au disque central sont sommées.

5. Méthode de traitement selon l'une des revendications 1 à 4, les clichés de diffraction comportant plusieurs parties principales formées par des disques de diffraction, ladite méthode de traitement comportant une étape c') lors de laquelle un masque numérique est appliqué au fond diffus conservant les pixels des points situés entre les disques de diffraction correspondant à des défauts cristallographiques de l'échantillon, tels que des dislocations, des fautes d'empilement, des macles.

6. Méthode de traitement selon l'une des revendications 1 à 5, dans laquelle l'étape a) est obtenue en choisissant un cliché de référence dans la série de cliché de diffraction et en réalisant une corrélation croisée avec les autres clichés de diffraction de la série.

7. Méthode d'analyse d'un échantillon au moins en partie cristallin ou polycristallin ou au moins en partie amorphe, comportant une étape d'acquisition de clichés de diffraction par balayage d'une zone donnée de l'échantillon par un faisceau, chaque cliché de diffraction étant corrélé à la position du faisceau sur l'échantillon, et chaque cliché comportant un disque central et au moins une partie principale et les étapes de la méthode de traitement selon l'une des revendications 1 à 6.

8. Méthode d'analyse selon la revendication 7, dans laquelle le faisceau présente un angle de convergence inférieur ou égal à 0,229° (4 mrad) dans le cas du silicium en axe de zone <110> à une tension d'accélération du microscope de 200 kV.

9. Méthode d'analyse selon la revendication 7 ou 8, dans laquelle les clichés de diffraction sont réalisés en mode précession, le mode précession signifiant que le faisceau incident effectue au moins une révolution autour d'un axe optique d'un microscope, le faisceau incident formant un angle par rapport à l'axe optique du microscope, et génère un cône de précession.

10. Méthode d'analyse d'un échantillon selon la revendication 7, 8 ou 9, comportant également une étape de réalisation d'une cartographie de champ électrique, d'une cartographie de déformation à partir desdits clichés de diffraction et une étape de comparaison de la ou desdites cartographies avec la au moins une image reconstruite obtenue à l'étape d).

## Patentansprüche

1. Methode zur numerischen Bearbeitung von Beugungsbildern, die folgenden Schritten enthaltend, aus einer Reihe von Beugungsbildern, die durch Abtasten eines bestimmten Bereichs einer Probe durch eine Sonde erhalten werden, wobei die Beugungsbilder eine zentrale Scheibe enthalten, die die Scheibe mit der höchsten Intensität ist, und mindestens einen Hauptteil, der die gebeugten Scheiben für ein monokristallines oder polykristallines Material bezeichnet und Ringe für ein amorphes Material,
a) Erkennung der Position der zentralen Scheibe auf jedem Beugungsbild,
b) Erkennung des mindestens einen Hauptteils auf jedem Beugungsbild,
c) Anwendung einer numerischen Blende auf jedes Beugungsbild, wobei auf jedem Beugungsbild die Pixel entfernt werden, die der zentralen Scheibe und dem mindestens einen Hauptteil entsprechen, so dass nur der diffuse Hintergrund bewahrt bleibt, wobei die numerische Blende aus den Erkennungen der Schritte a) und b) erstellt wird,
d) für mindestens einen Teil der Pixel des diffusen Hintergrunds, Summierung der aus allen Beugungsbildern des Teils der Pixel des diffusen Hintergrunds extrahierten Intensitäten auf alle Beugungsbilder, und Erzielung mindestens einer rekonstruierten Abbildung des bestimmten Bereichs.

2. Bearbeitungsmethode nach Anspruch 1, wobei in Schritt d) die Intensitäten aller Pixel summiert werden.

3. Bearbeitungsmethode nach Anspruch 1, wobei in Schritt d) nur die Intensitäten der Pixel summiert werden, die mindestens den Hauptteil umgeben.

4. Bearbeitungsmethode nach Anspruch 1, wobei in Schritt d) die Intensitäten der Pixel summiert werden, die sich auf mindestens einem konzentrischen Ringbereich an der zentralen Scheibe befinden.

5. Bearbeitungsmethode nach einem der Ansprüche 1 bis 4, wobei die Beugungsbilder mehrere Hauptteile enthalten, die durch Beugungsscheiben gebildet werden, wobei die Bearbeitungsmethode einen Schritt c') enthält, bei dem eine numerische Blende auf den diffusen Hintergrund aufgebracht wird, wobei die Pixel der Punkte bewahrt bleiben, die sich zwischen den Beugungsscheiben befinden, die kristallographischen Defekten der Probe entsprechen, wie Versetzungen, Stapelfehler, Zwillinge.

6. Bearbeitungsmethode nach einem der Ansprüche 1 bis 5, wobei Schritt a) durch Auswahl eines Referenzbildes aus der Reihe von Beugungsbildern erhalten wird und durch Realisierung einer Kreuzkorrelation mit den anderen Beugungsbildern der Reihe.

7. Analysemethode einer Probe, die mindestens teilweise kristallin oder polykristallin ist oder mindestens teilweise amorph, die einen Schritt zum Erfassen von Beugungsbildern durch Abtasten eines bestimmten Bereichs der Probe durch einen Strahl enthält, wobei jedes Beugungsbild mit der Position des Strahls auf der Probe korreliert, und jedes Bild eine zentrale Scheibe und mindestens einen Hauptteil enthält und die Schritte der Bearbeitungsmethode nach einem der Ansprüche 1 bis 6.

8. Analysemethode nach Anspruch 7, wobei der Strahl einen Konvergenzwinkel aufweist, der kleiner oder gleich 0,229° (4 mrad) ist im Fall von Silizium in der Bereichsachse <110> bei einer Beschleunigungsspannung des Mikroskops von 200 kV.

9. Analysemethode nach Anspruch 7 oder 8, wobei die Beugungsbilder im Präzessionsmodus realisiert werden, wobei der Präzessionsmodus bedeutet, dass der einfallende Strahl mindestens eine Rotation um eine optische Achse eines Mikroskops durchführt, wobei der einfallende Strahl einen Winkel zur optischen Achse des Mikroskops bildet und einen Präzessionskegel erzeugt.

10. Analysemethode einer Probe nach Anspruch 7, 8 oder 9, die auch einen Schritt enthält zur Realisierung einer Kartografie des elektrischen Feldes, einer Kartografie der Verformung von den Beugungsbildern ausgehend und einen Schritt des Vergleichs der einen oder mehreren Kartografien mit der mindestens einen rekonstruierten Abbildung, die in Schritt d) erhalten wurde.

## Claims

1. A method for digital processing diffraction patterns including the following steps, from a series of diffraction patterns obtained by scanning a given area of a sample by a probe, the diffraction patterns including a central disk being the disk which has the highest intensity, and at least one main portion, designating diffracted disks for a monocrystalline or polycrystalline material and rings for an amorphous material,
a) detecting the position of the central disk on each diffraction pattern,
b) detecting the at least one main portion on each diffraction pattern,
c) applying a digital mask on each diffraction pattern, removing on each diffraction pattern the pixels corresponding to the central disc and to the at least one main portion so as to maintain only the diffuse background, said digital mask being produced from the detections of steps a) and b),
d) for at least one portion of the pixels of the diffuse background, summing the intensities extracted from all diffraction patterns of the portion of the pixels of the diffuse background on all diffraction patterns, and obtaining at least one reconstructed image of said given area.

2. The processing method according to claim 1, wherein, during step d), the intensities of all pixels are summed.

3. The processing method according to claim 1, wherein, during step d), only the intensities of the pixels surrounding the at least main portion are summed.

4. The processing method according to claim 1, wherein, during step d), the intensities of the pixels located on at least one annular area concentric with the central disk are summed.

5. The processing method according to one of claims 1 to 4, the diffraction patterns including several main portions formed by diffraction discs, said processing method including a step c') during which a digital mask is applied to the diffuse background maintaining the pixels of the points located between the diffraction disks corresponding to crystallographic defects of the sample, such as dislocations, stacking faults, twin crystals.

6. The processing method according to one of claims 1 to 5, wherein step a) is obtained by selecting a reference pattern from the series of diffraction patterns and by carrying out a cross-correlation with the other diffraction patterns of the series.

7. A method for analysing an at least partially crystalline or polycrystalline or at least partially amorphous sample, including a step of acquiring diffraction patterns by scanning a given area of the sample by a beam, each diffraction pattern being correlated to the position of the beam on the sample, and each pattern including a central disk and at least one main portion and the steps of the processing method according to one of claims 1 to 6.

8. The analysis method according to claim 7, wherein the beam has a convergence angle less than or equal to 0.229° (4 mrad) in the case of silicon in area axis <110> at a microscope acceleration voltage of 200 kV.

9. The analysis method according to claim 7 or 8, wherein the diffraction patterns are made in precession mode, the precession mode meaning that the incident beam performs at least one revolution about an optical axis of a microscope, the incident beam forming an angle relative to the optical axis of the microscope, and generates a precession cone.

10. The method for analysing a sample according to claim 7, 8 or 9, also including a step of carrying out an electric field mapping, a deformation mapping from said diffraction patterns and a step of comparing said mapping(s) with the at least one reconstructed image obtained in step d).
